# EUROPÄISCHE PATENTSCHRIFT

(11) **EP 0 617 256 B1**
(45) Veröffentlichungstag und Bekanntmachung des Hinweises auf die Patenterteilung: **10.09.1997**
(21) Anmeldenummer: 93104961.3
(22) Anmeldetag: 25.03.1993
(51) Int. Cl.: G01B 11/08, G01B 11/24

(54) **Verfahren zur Ermittlung eines Durchmessers einer Umfangslinie an Rädern von Radsätzen und Einrichtung zur Durchführung des Verfahrens**
Procedure and device to determine the diameter of a circumference of a wheel or wheelset
Procédé pour déterminer le diamètre d'une circonférence d'une zone ou d'un train de zones et dispositif le mettant en oeuvre

(43) Veröffentlichungstag der Anmeldung: 28.09.1994
(73) Patentinhaber: HEGENSCHEIDT-MFD GmbH, D-41812 Erkelenz (DE)
(72) Erfinder: Schneider, Friedhelm, Dr.-Ing., W-5144 Wegberg (DE)
(74) Vertreter: Castell, Klaus, Dr.-Ing.

(56) Entgegenhaltungen:
- EP-A- 0 208 060
- DE-A- 3 522 809

## Beschreibung

Die Erfindung betrifft ein Verfahren zur Ermittlung eines Durchmessers einer durch mindestens einen Punkt einer Umfangsfläche an Rädern von Radsätzen mit einem Radkranz- bzw. Radreifenprofil verlaufenden Umfangslinie, und eine Einrichtung zur Durchführung des vorgeschlagenen Verfahrens.

Ein derartiges Verfahren ist bereits bekannt geworden durch die EP-0254772 B1. Dort wird vorgeschlagen, die Lage von zwei in Umfangrichtung versetzten, in gleicher Querschnittsebene liegenden beliebigen Punkten auf der Lauffläche eines auf einer Laufebene befindlichen Rades relativ zueinander durch gleichzeitiges Antasten zu ermitteln und unter Zuhilfenahme der Bogenhöhe des Kreisbogens über der diese beiden Punkte verbindenden Sehne den Raddurchmesser in dieser Querschnittsebene zu berechnen.

Zur Durchführung des gattungsgemäßen Verfahrens wird dort eine Einrichtung vorgeschlagen mit mindestens einer in einem Meßbereich angeordneten Laufebene, mindestens einer Einrichtung enthaltend mindestens eine Strahlenquelle zur Erzeugung von Reflexionsflächen mittels elektromagnetischer Strahlenbündel an der Lauffläche, Sensor- oder Empfangseinrichtungen zur Erfassung der genannten Reflexionsflächen sowie eine Steuer- und Auswerteeinrichtung, verbunden mit einer Ausgabeeinheit, wobei die Steuer- und Auswerteeinrichtung sowohl mit den Empfangseinrichtungen als auch mit der Einrichtung zur Erzeugung der Reflexionsflächen verbunden ist und wobei diese Einrichtung und die genannten ,Empfangseinrichtungen derart relativ zueinander angeordnet sind, daß die Erzeugung der Reflexionsflächen und deren Erfassung innerhalb des Meßbereichs möglich ist.

Nach dem in der EP-0254772 B1 vorgeschlagenen Verfahren, durchgeführt mit der genannten Einrichtung zu diesem Verfahren, ist es möglich, den Durchmesser eines Rades nur in einer bestimmten Querschnittebene zu ermitteln. Da diese Querschnittebene vorbestimmt ist, muß das Rad bzw. der Radsatz so geführt werden, daß kein unzulässiger seitlicher Versatz auftreten kann, da sonst die gewünschte Querschnittsebene nicht erfaßt wird. Weist die angetastete Querschnittsebene des Rades Ausbröckelungen auf und fällt wenigstens eine Antastung zufällig in den Bereich der Ausbröckelung, so wird ein für die Berechnung nicht verwendbarer Tastpunkt aufgenommen und die nachfolgende Berechnung des Durchmessers wird mit falschen Daten durchgeführt, weil die Ausbröckelungen nicht erkannt werden.

Zusätzlich kann der Bereich der Lauffläche bei im Fahrzeug eingebauten Rädern durch Umbauten wie Sandrohre und Bremsbacken teilweise verdeckt und somit für eine Messung schlecht zugänglich und die Meßbasis eingeschränkt sein.

Die DE-A-3522809 und die EP-A-0208060 beschreiben Verfahren mit Vorrichtungen zur Durchmesserbestimmung an auf Schienen rollenden und im Fahrzeug eingebauten Radsätzen. Hierbei wird in einer beispielsweise durch Lichtschranken definierten Meßstrecke die Durchlaufzeit eines Rades gemessen und hieraus dessen Geschwindigkeit ermittelt. Innerhalb dieser Meßstrecke oder auch vorgeschaltet oder nachgeschaltet wird über berührungslose Abstandstaster oder über Laserstrahlenbündel die Umfangsfläche des Rades ermittelt. Diese Verfahren sind relativ aufwendig, da der Durchmesser des Rades erst ermittelt werden kann, wenn eine definierte Strecke durchlaufen worden ist.

Ausgehend von diesem Stand der Technik liegt der Erfindung die Aufgabe zugrunde, ein Verfahren vorzuschlagen, mit dem die Durchmesser an Rädern von Radsätzen so ermittelt werden können, daß durch seitlichen Versatz der Räder sowie durch Ausbröckelungen und Umbauten keine Beeinträchtigung der Meßdaten erfolgt. Weiterhin soll eine Einrichtung zur Durchführung dieses Verfahrens vorgeschlagen werden.

Diese Aufgabe wird mit einem Verfahren mit den Merkmalen des Patentanspruchs 1 gelöst.

Mit der Berechnung des Durchmessers einer konzentrisch zur Radachse verlaufenden Referenzlinie wird ein Ausgangsmaß geschaffen für die angestrebte Durchmesserberechnung im Bereich des Radkranz- bzw. des Radreifenprofils. Mit dem jeweiligen radialen Abstand eines Punktes oder auch mehrerer Punkte auf dem Lichtschnitt der Profillinie eines Radkranz- bzw. Radreifenprofils von der Referenzlinie können nun der oder die Durchmesser von jeweils durch diese Punkte verlaufenden Umfangslinien berechnet werden. Dadurch, daß ein Lichtschnitt der Profillinie für die Auswahl von Punkten zur Verfügung steht, ist es möglich, zu jedem beliebigen Punkt auf dieser Profillinie bzw. auf dem Lichtschnitt den Durchmesser einer durch diesen Punkt verlaufenden Umfangslinie zu bestimmen. Sollte ein aufgenommener Lichtschnitt in einem Profilbereich liegen der Ausbröckelungen aufweist, kann dieser Mangel durch eine Interpolation beseitigt werden. Als konzentrisch zur Radachse verlaufende Referenzlinien kann jede durch den Lichtschnitt erreichbare Linie am Rad ausgewählt werden. Hierdurch können vorzugsweise Referenzlinien auf die Spurkranzkuppe des Radkranz- bzw. Radreifenprofils gelegt werden, da dieser Bereich am wenigsten verschlissen und gut zugänglich ist, bzw. nicht durch Sandrohre oder Umbauten verdeckt ist.

Zur Durchführung des der Erfindung zugrundeliegenden Verfahrens wird eine Einrichtung mit den Merkmalen des Patentanspruchs 2 vorgeschlagen.

Hierdurch ist es möglich, den Durchmesser eines Rades nicht nur in einer bestimmten Querschnittebene zu ermitteln sondern, durch die Möglichkeit der Erzeugung von sich in Querschnittsrichtung überdeckenden Lichtschnitten, auf dem ganzen Radkranz- bzw. Radreifenprofil in jeder vom Lichtschnitt überdeckten Querschnittsebene. Für die Aufnahme der Referenzlinie des zu vermessenden Rades bzw. des Radsatzes ist daher eine enge axiale Führung des Rades oder des Radsatzes nicht erforderlich.

Nach einer Ausgestaltung der erfindungsgemäßen Einrichtung wird vorgeschlagen, daß zwei Empfangseinrichtungen zu den ihnen zugeordneten Strahlenbäumen so angeordnet sind, daß ihre optischen Achsen sich etwa rechtwinklig schneiden. Hierdurch wird erreicht, daß die von den Strahlenbäumen erzeugten Lichtschnitte aus einer günstigen Aufnahmeposition von den Empfangseinrichtungen aufgenommen werden können und dadurch Verzerrungen minimiert werden.

Nach einer zusätzlichen Ausgestaltung der erfindungsgemäßen Einrichtung wird vorgeschlagen, daß zur Erzeugung der Strahlenbäume je eine Strahlenquelle oder mindestens eine Strahlenquelle mit mindestens zwei Strahlenteilern und mindestens einem Umlenkspiegel vorgesehen ist. Mit diesen Ausgestaltungen wird erreicht, daß je nach Bedarf und Platzverhältnissen eine oder mehrere Strahlenquellen eingesetzt werden können. Beim Einsatz einer Strahlenquelle mit mehreren Strahlenteilern und Umlenkspiegel ist es möglich, eine kompakte, kostengünstige Einheit zu schaffen, die z.B. als Modul vorgesehen sein kann.

Nach einer weiteren Ausgestaltung der erfindungsgemäßen Einrichtung wird vorgeschlagen, daß zwei Empfangseinrichtungen so angeordnet sind, daß sie je mit ihren optischen Achsen einen Abstand zwischen den Lichtschnitten eines größten zu vermessenden Rades und eines kleinsten zu vermessenden Rades etwa mittig durchlaufen. Hierdurch wird erreicht, daß die Aufnahmen der Lichtschnitte durch die Empfangseinrichtungen über den gesamten Aufnahmebereich bzw. in dem Bereichs des Abstandes in guter Schärfe empfangen werden.

Nach einer anderen Ausgestaltung der erfindungsgemäßen Einrichtung wird vorgeschlagen, daß eine Strahlenquelle bzw. ein Strahlenbaum zur Erzeugung eines Lichtschnittes so angeordnet ist, daß ihre optische Achse etwa radial zur Radachse und senkrecht zur Laufebene verläuft und daß eine ihr zugeordnete Empfangseinrichtung so angeordnet ist, daß ihre optische Achse mit der optischen Achse der Strahlenquelle einen spitzen Winkel bildet. Hierdurch kann der durch die Strahlenquelle erzeugte Lichtschnitt besonders dann, wenn der Spitze Winkel groß ist, von der Empfangseinrichtung nahezu unverzerrt aufgenommen und abgebildet werden.

Die Erfindung soll nun anhand der beigefügten Zeichnungen näher erläutert werden.

Es zeigen:
- Figur 1: eine schematische Darstellung einer erfindungsgemäßen Einrichtung in einer Seitenansicht
- Figur 2: eine schematische Darstellung der erfindungsgemäßen Einrichtung in einer Vorderansicht in Laufrichtung des Rades
- Figur 3,4 und 5: schematisch dargestellt die Abbildungen der Lichtkanten auf einer Spurkranzkuppe
- Figur 6: schematisch dargestellt die Punkte auf der Spurkranzkuppe in einem rechtwinkligen Koordinatensystem
- Figur 7 und 8: schematisch dargestellt einen Radkranz mit den durch Lichtschnitte beleuchteten Bereichen
- Figur 9: eine ergänzende Darstellung zu Figur 7
- Figur 10: eine weitere Ausführungsmöglichkeit der erfindungsgemäßen Einrichtung schematisch dargestellt
- Figur 11: weitere schematische Darstellung einer erfindungsgemäßen Einrichtung in einer Seitenansicht

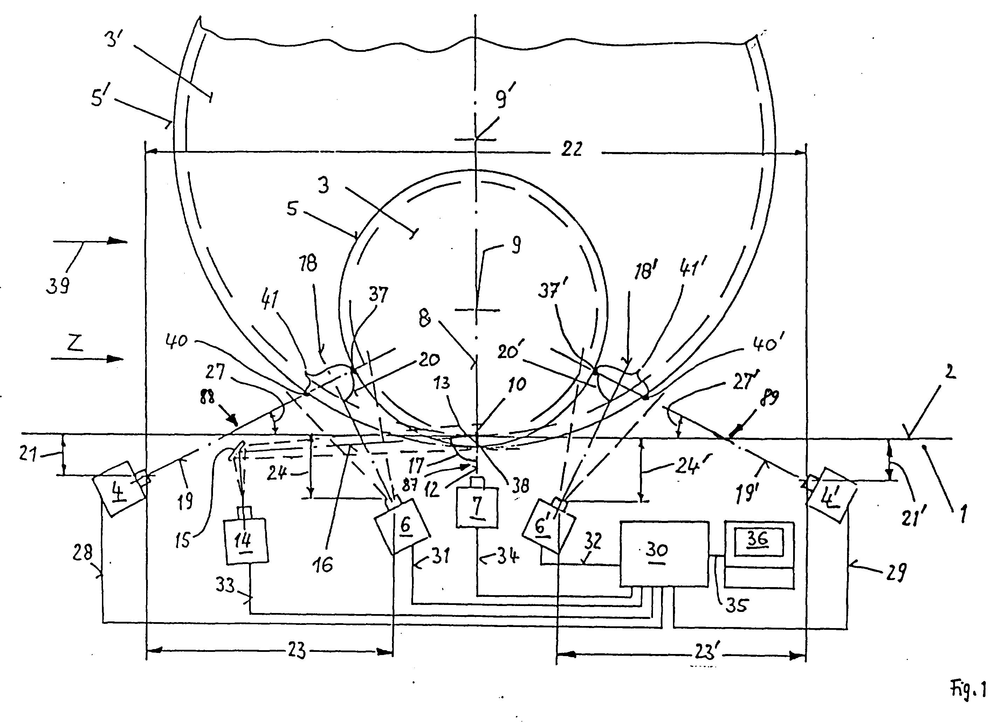

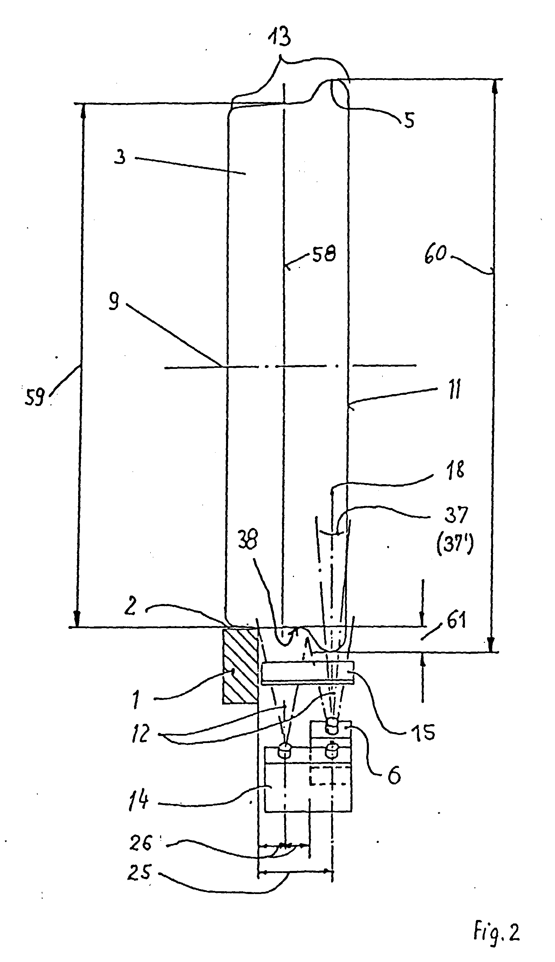

Figur 1 zeigt den schematischen Aufbau der erfindungsgemäßen Einrichtung aus einer Seitenansicht. Gleichzeitig werden hier ein kleinstes zu vermessendes Rad 3 und ein größtes zu vermessendes Rad 3' dargestellt. Auf der Laufebene 2 einer entsprechend abgestützten Schiene 1 kann sich ein Rad 3,3' eines nicht näher dargestellten Radsatzes beispielsweise rollend bewegen. Das Rad 3,3' befindet sich in einer geeigneten Meßposition, in der die Lichtschnitte 37,37',38,40,40' durch die Strahlenquellen 4,4',7 erzeugt und für die Durchmesserermittlung durch die Empfangseinrichtungen 6,6',14 aufgenommen werden können. Das Erreichen der Meßposition kann z.B. mit Hilfe mechanischer oder optischer Fühler ermittelt werden. Im Ausführungsbeispiel nach Figur 1 ist die Meßposition erreicht, wenn z.B. der Aufstandspunkt 10 in der optischen Achse 12 der Strahlenquelle 7 liegt. Dies ist dann der Fall, wenn die Empfangseinrichtung 14 erstmals ein Bild erfaßt. Beidseitig des Aufstandpunktes 10 ist je eine Strahlenquelle 4,4' zur Erzeugung von Lichtschnitten 37,37',40,40', beispielsweise auf einer Spurkranzkuppe 5,5' des Rades 3,3', angeordnet und zwar so, daß der Querschnitt der Spurkranzkuppe 5,5' vom Lichtschnitt 37,37',40,40' erfaßt wird. Hierzu sind die Strahlenquellen 4,4' beidseitig einer Ebene 8, die senkrecht zur Laufebene 2 steht und in der in Meßposition die Radsatzachse liegt, so angeordnet, das ihre optischen Achsen 19,19' die Laufebene 2 in bekannten, spitzen Winkeln 27,27' schneiden. Die Strahlenquellen 4,4', können dabei beispielsweise als Laser ausgebildet sein. Die den Strahlenquellen 4,4' zugeordneten Empfangseinrichtungen 6,6' sind beidseitig der genannten Ebene 8 zwischen den Strahlenquellen 4,4' angeordnet. Um einen dritten Lichtschnitt zu erzeugen, ist eine dritte Strahlenquelle 7 etwa mittig zwischen den Empfangseinrichtungen 6, 6' so angeordnet, daß ihre optische Achse 12 senkrecht zur Laufebene steht. Die dritte Strahlenquelle 7 erzeugt dabei einen Lichtschnitt 38 auf dem Radkranz- bzw. auf dem Radreifenprofil 13 ausgehend von der in Figur 2 gezeigten inneren Radstirnfläche 11, wenn das Rad in Meßposition steht. Auch diese Strahlenquelle 7 kann als Laser ausgebildet sein. Der Strahlenquelle 7 ist ebenfalls eine Empfangseinrichtung 14 zugeordnet. Die mit dem Lichtschnitt 38 beleuchtete Profilkontur des Radkranzes- bzw. Radreifenprofils 13 wird dieser Empfangseinrichtung 14 so über einen Umlenkspiegel 15 zugeleitet, daß die optische Achse 12 der Strahlenquelle 7 und die optische Achse 16 der Empfangseinrichtung 14 dabei in einen spitzen Winkel 17 aufeinandertreffen. Besonders dann, wenn der spitze Winkel 17 groß ist, kann der Lichtschnitt 38 nahezu unverzerrt von der Empfangseinrichtung 14 aufgenommen und abgebildet werden. Um die anderen Lichtschnitte 37,37',40,40' aus einer günstigen Position aufnehmen zu können und dabei Verzerrungen zu vermeiden, sind die entsprechenden Empfangseinrichtungen 6,6' so angeordnet, daß ihre optischen Achsen 18,18' die optischen Achsen 19,19' der ihnen zugeordneten Strahlenquellen 4,4' etwa in einem rechten Winkel 20,20' kreuzen. Als Empfangseinrichtungen 6,6',14 können CCD- Kameras vorgesehen sein.

Die Strahlenquellen 4,4',7 und die ihnen zugeordneten Empfangseinrichtungen 6,6',14 können unterhalb der von einer Schiene 1 gebildeten Lauffläche 2 angeordnet sein. Die Strahlenquellen 4,4' zur Erzeugung der Lichtschnitte 37,37',40,40' auf der Spurkranzkuppe 5,5' sind in bekannten Abständen 21,21' zur Laufebene 2 unterhalb dieser und mit bekanntem Abstand 22 zueinander angeordnet. Die dritte Strahlenquelle 7 zur Erzeugung eines Lichtschnittes 38 auf dem Radkranz- bzw. Radreifenprofil 13 ist auf der Mitte dises Abstandes 22 angeordnet. Die Empfangseinrichtungen 6,6' sind beidseitig der dritten Strahlenquelle 7 in bekannten Abständen 23,23' zu den anderen Strahlenquellen 4,4' und in bekannten Abständen 24,24' zur Laufebene 2 angeordnet.

Die Empfangseinrichtungen 6,6',14 sind, wie in Figur 2 dargestellt, zur Schiene 1 so angeordnet, daß ihre optischen Achsen 12,18,18' bekannte Abstände 25,26 zur Laufebene 2 und untereinander aufweisen. Anstelle einer Empfangseinrichtung 14 zur Aufnahme des Radkranz- bzw. Radreifenprofils 13 können wie in Figur 2 dargestellt auch mehrere Empfangseinrichtungen vorgesehen sein. Wie in Figur 1 dargestellt verlaufen die optischen Achsen 18,18' der Strahlenquellen 4,4' mittig durch die Abstände 41,41' zwischen den Lichtschnitten 37 und 37' sowie 40 und 40', jeweils zwischen dem größten Rad 3' und dem kleinsten Rad 3. Hierdurch können Lichtschnitte in dem Bereich der Abstände 41,41' von den Empfangseinrichtungen 6,6' in guter Schärfe empfangen werden. Alle Strahlenquellen 4,4',7 sowie alle Empfangseinrichtungen 6,6',14 sind, wie weiter in Figur 1 dargestellt, über Übertragungsmittel 28,29,31,32,33,34 mit einem Rechner 30 verbunden. An den Rechner 30, der als Steuer- und Auswerteeinheit dient, ist über ein weiteres Übertragungmittel 35 eine Ausgabeeinheit 36 angeschlossen.

Ein Meßvorgang nach dem erfindungsgemäßen Verfahren wird dadurch eingeleitet, daß das Rad 3,3' bzw. ein in Figur 1 nicht dargestellter Radsatz beispielsweise in Pfeilrichtung 39 auf der Laufebene 2 der Schiene 1 in die eingeschaltete und damit betriebsbereite erfindungsgemäße Einrichtung einrollt. Sodann wird in der in Figur 1 dargestellten Meßposition, die mit der Ebene 8 zusammenfällt, der Meßvorgang ausgelößt. Die Auslösung des Meßvorgangs kann durch einen in Figur 1 nicht dargestellten Schienenschalter, der vom Rad selbst betätigt wird, erfolgen. Auslöser könnte auch sein das erstmalige Erfassen eines Lichtschnittes durch die Empfangseinrichtung 14. Nach dem Betätigen z.B. des Schienenschalters koordiniert der Rechner 30 den weiteren Ablauf des Meßvorganges und aktiviert über die Übertragungsmittel 28,29,31,32,33,34 mindestens die Strahlenquellen 4,4' und die diesen zugeordneten Empfangseinrichtungen 6,6'. Die Strahlenquellen 4,4',7 erzeugen sodann Lichtschnitte 37,37',38 auf der Spurkranzkuppe 5,5' und auf dem Radkranz- bzw. Radreifenprofil 13. Gleichzeitig werden von den Empfangseinrichtungen 6,6',14 die als diffus reflektierte Linien sichtbaren Lichtschnitte 37,37',38;40,40' in Lage und Form aufgenommen und dem Rechner 30 über die Übertragungsmittel 31,32,33 zugeleitet und dort gespeichert. Mit den bekannten Anordnungen der Strahlenquellen 4,4',7 und der Empfangseinrichtungen 6,6',14 relativ zueinander und relativ zu der Laufebene 2 und den damit bekannten Abständen 21,21'22,23,23',24,24', den Abständen 25,26 (Figur 2) sowie den definierten Winkeln 27,27' (Figur 1) und den abgespeicherten Daten der aufgenommenen Lichtschnitte 37,37',38 errechnet der Rechner 30 nun die Lage und Form der Lichtschnitte 37,37' auf der Spurkranzkuppe 5,5' und die Lage und Form der durch den Lichtschnitt 38 beleuchteten Profillinie des Radkranz- bzw. Radreifenprofils 13.

Figur 2 zeigt die Einrichtung zur Durchführung des erfindungsgemäßen Verfahrens aus der Ansicht in Richtung Z bzw. in Laufrichtung des Rades 3. Das Rad 3 befindet sich in Meßposition. Auf der Spurkranzkuppe 5 und auf dem Radkranz- bzw. Radreifenprofil 13 werden durch die in Figur 2 nicht dargestellten Strahlenquellen 4,4',7 die Lichtschnitte 37,37',38 erzeugt. Die Lichtschnitte 37,37' werden von der Empfangseinrichtung 6 und der in Figur 2 nicht dargestellten Empfangseinrichtung 6' aufgenommen und abgebildet, sowie der Lichtschnitt 38 über einen Umlenkspiegel 15 von der Empfangseinrichtung 14. Von den Empfangseinrichtungen 6,6',14 aus werden nun die abgebildeten Lichtschnitte 37,37',38, wie schon zuvor beschrieben, an den in Figur 2 nicht dargestellten Rechner 30 weitergeleitet.

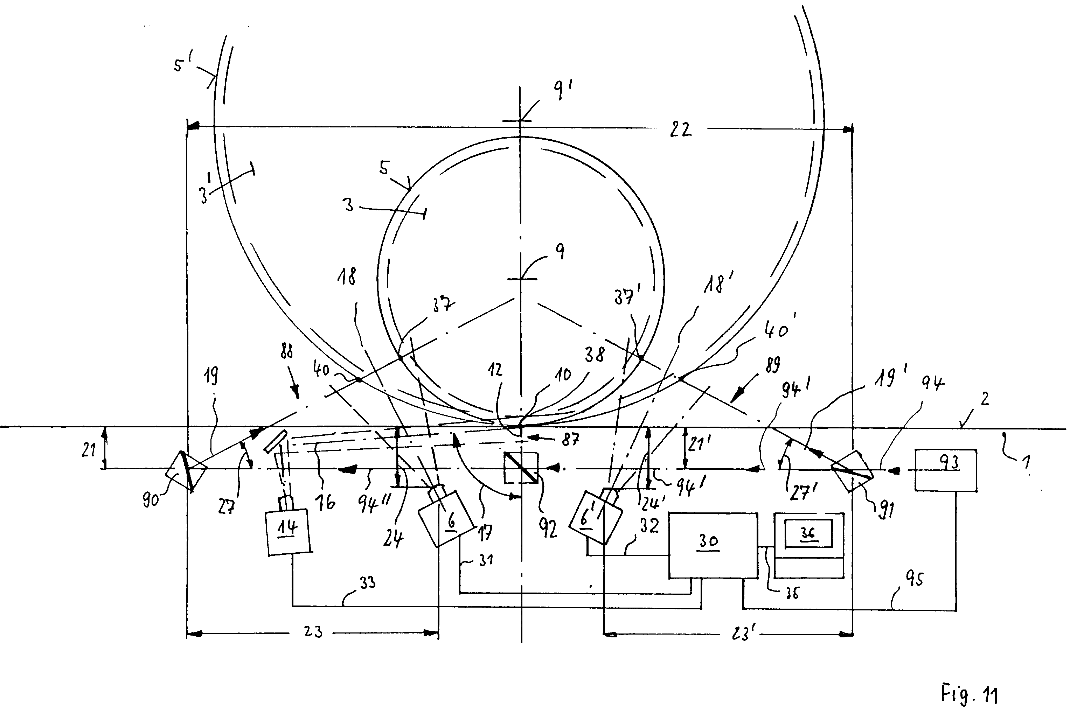

Figur 11 zeigt den schematischen Aufbau einer erfindungsgemäßen Einrichtung in einer Seitenansicht, bei dem Strahlenquellen durch Strahlenteiler 91,92 und Umlenkspiegel 90 ersetzt sind. Nur eine Strahlenquelle 93 zur Erzeugung eines Laserstrahls 94 ist dann erforderlich. Der von der Strahlenquelle 93 erzeugte Laserstrahl 94 trifft auf den Strahlenteiler 91 und wird aufgeteilt in den Strahlenbaum 89, mit der optischen Achse 19' und dem Laserstrahl 94'. Der Laserstrahl 94' trifft auf den Strahlenteiler 92 und wird aufgeteilt in den Strahlenbaum 87, mit der optischen Achse 12 und dem Laserstrahl 94". Dieser Laserstrahl 94'' trifft auf den Umlenkspiegel 90, wird umgelenkt und bildet den Strahlenbaum 88, mit der optischen Achse 19. Die Empfangseinrichtungen 6,6',14 sind verblieben und die für die Wirkungsweise der Anlage erforderlichen relativen Abstände der Bauteile der Einrichtung stimmen mit den relativen Abständen einer Einrichtung nach Figur 1 überein. Die Auslösung eines Meßvorganges erfolgt bei dieser Einrichtung nach Figur 11 in gleicher Weise wie bei einer Einrichtung nach Figur 1 z.B. durch Auslösen eines nicht dargestellten Schienenschalters. Nach dem Betätigen des Schienenschalters koordiniert der Rechner 30 den weiteren Ablauf des Meßvorganges und aktiviert über die Übertragungsmittel 31,32,33,95 die Strahlenquelle 93 und die zugeordneten Empfangseinrichtungen 6,6'. Die Strahlenquelle 93 erzeugt sodann über Laserstrahl 94,94',94'' Strahlenteiler 91,92 und Umlenkspiegel 90 sowie Strahlenbäume 87,88,89 die Lichtschnitte 37,37',38 auf der Spurkranzkuppe 5,5' und auf dem Radkranz- bzw. Radreifenprofil 13. Der weitere Funktionsablauf erfolgt dann wie bei einer Einrichtung nach Figuren 1 und 2.

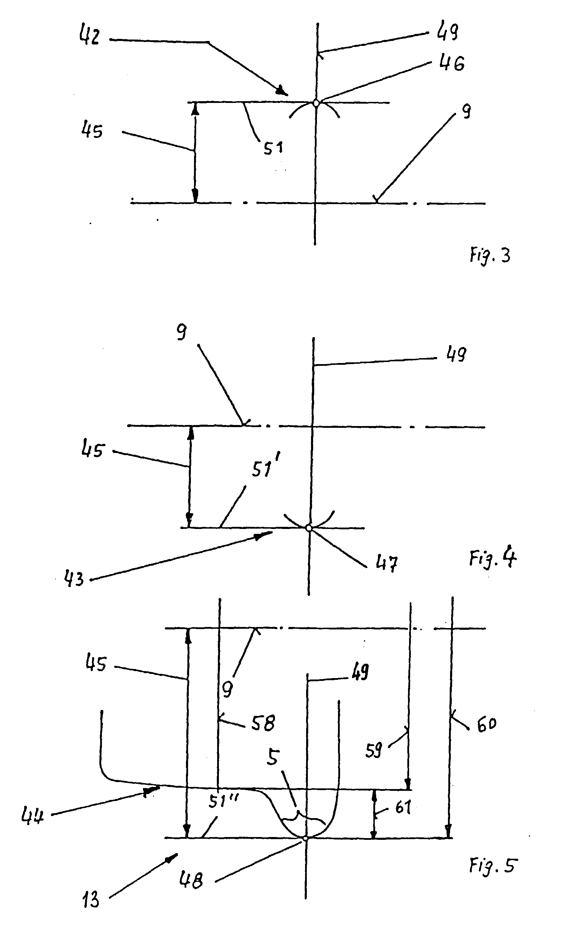

In den Figuren 3 und 4 sind die Abbildungen 42,43 der Lichtschnitte 37,37' der in Figur 2 gezeigten Spurkranzkuppe 5 und in Figur 5 die Abbildung 44 des Lichtschnittes 38 des Radkranz- bzw. Radreifenprofils 13 dargestellt. Der in Figur 1 schematisch dargestellte Rechner 30 bestimmt aus den Abbildungen 42,43 der Spurkranzkuppe 5 die Punkte 46,47 auf der Spurkranzkuppe 5, die von der Radachse 9 den größten radialen Abstand 45 aufweisen. Ebenso bestimmt der Rechner 30 aus der Abbildung 44 des Radkranz- bzw. Radreifenprofils 13 den Punkt 48 auf der Spurkranzkuppe 5, der ebenfalls den größten radialen Abstand 45 von der Radachse 9 aufweist.

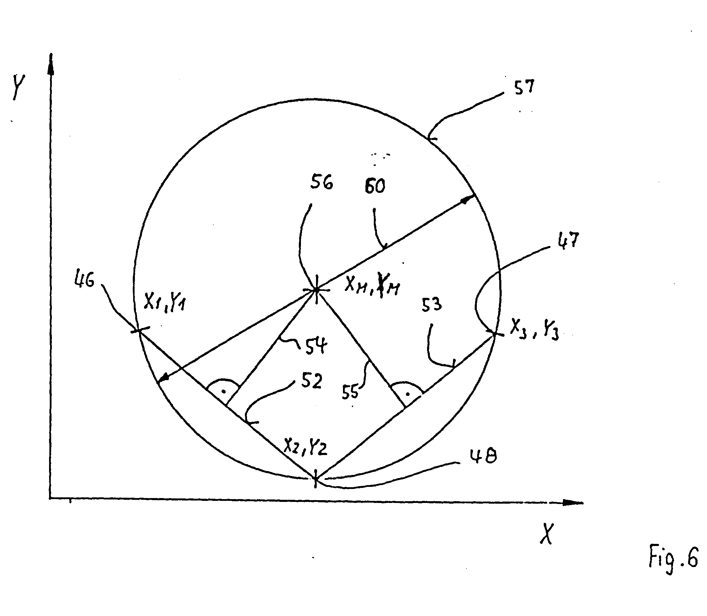

Diese Punkte 46,47,48 werden definiert durch je eine parallel zur Radachse verlaufende Tangente 51,51',51", die an den Abbildungen 42,43,44 anliegt (Figuren 3 bis 5). Die Punkte 46,47,48 liegen auf den Schnittpunkten einer zur Radachse 9 rechtwinkligen Ebene 49 und den Tangenten 51,51',51". Aus den so definierten Punkten 46,47,48 kann nun die in Figur 6 dargestellte Umfangslinie 57 des in Figur 2 dargestellten Spurkranzdurchmessers 60 vom Rechner 30 (Figur 1) errechnet werden. Dabei werden die Punkte 46,47,48 von dem Rechner 30 in ein rechtwinkliges Koordinatensystem unter Festlegung der jeweiligen x,y-Koordinaten eingeordnet. Der Punkt 46 erhält beispielsweise die Koordinaten x1,y1, der Punkt 48 die Koordinaten x2,y2 und der Punkt 47 die Koordinaten x3,y3. Für die Berechnung des Durchmessers des durch die Umfangslinie 57 beschriebenen Kreises werden beispielsweise die Punkte 46 mit 48 und 47 mit 48 durch die Sehnen 52, 53 verbunden. Mit Hilfe der Koordinaten kann nun die Steigung der jeweiligen Sehne berechnet werden und aus den Steigungen, die die Sehnen aufweisen, sind wiederum die Steigungen von Mittelsenkrechten 54,55 auf den Sehnen 52, 53 berechenbar. Die Mittelsenkrechten 54, 55 schneiden sich im Mittelpunkt 56 des durch die Umfangslinie 57 beschriebenen Kreises. Die Koordinaten xm, ym des Mittelpunktes 56 sind ebenfalls berechenbar. Der zweimalige Abstand des Mittelpunktes 56 von einem der Punkte 46, 47, 48 ist nun der gesuchte Durchmesser des durch die Umfangslinie 57 beschriebenen Kreises, der hier gleich dem Spurkranzdurchmesser 60 ist. Ausgehend von diesem Spurkranzdurchmesser 60 können nun auch andere Durchmesser am Rad berechnet werden. Beispielsweise kann der in Figur 2 und 5 dargestellte Meßkreisdurchmesser 59 berechnet werden. Hierzu wird vom Spurkranzdurchmesser 60 zweimal die Spurkranzhöhe 61, die durch den Abstand zwischen dem Schnittpunkt der Meßkreisebene 58 mit dem Radkranz- bzw.

Radreifenprofil 13 und dem Spurkranzdurchmesser 60 definiert ist, abgezogen. Spurkranzdurchmesser 60 minus zweimal Spurkranzhöhe 61 ergibt den Meßkreisdurchmesser 59.

In dem zuvor beschriebenen Beispiel wurde eine Querschnittsebene am Rad, die durch den Spurkranzdurchmesser 60 verläuft, als Referenzlinie verwendet. Es ist aber auch jede andere Querschnittsebene, die durch den Spurkranz gelegt wird, als Referenzlinie geeignet.

Auf diese Art und Weise können auch andere Durchmesser als der Meßkreisdurchmesser 59 berechnet werden. Hierzu ist es lediglich erforderlich, die jeweilige Spurkranzhöhe 61 zu dem Punkt am Radkranz- bzw. Radreifenprofil 13 zu ermitteln, der in der Ebene am Rad liegt, deren Durchmesser berechnet werden soll. In ähnlicher Weise kann verfahren werden, wenn anstelle des Spurkranzes als Referenzlinie eine andere Referenzlinie am Rad 3 ausgewählt wird.
Die Berechnung des Durchmessers der Referenzlinie kann selbstverständlich auch auf andere Weise erfolgen, als hier beschrieben.

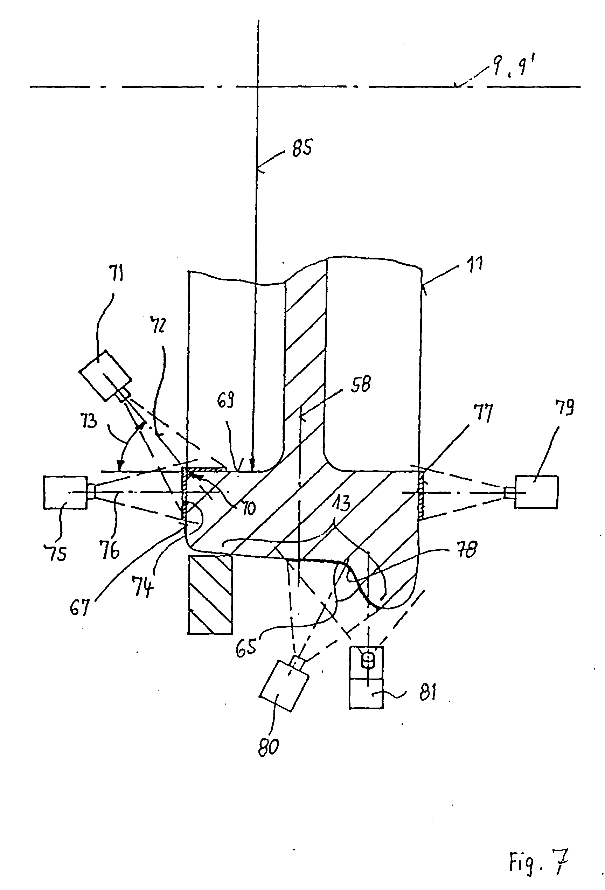

In Figur 7 wird eine Referenzlinie, gebildet aus einer äußeren Radstirnfläche 67 und einer inneren Zylinderfläche 69, die bei Rädern mit Radreifen die Meßfläche für die Radreifendicke ist, dargestellt.
Die eigentliche Referenzlinie soll die Kante 70 sein. Die äußere Radstirnfläche 67 und eine innere Zylinderfläche 69 werden von einer Strahlenquelle 71, deren optische Achse 72 unter einem bekannten Winkel 73 zur äußeren Radstirnfläche 67 angeordnet ist, beleuchtet und ein Lichtschnitt 74 so aufgebracht, daß beim Aufnehmen dieses Lichtschnittes 74 durch eine Empfangseinrichtung 75 die Kante 70 von der Empfangseinrichtung 75 abgebildet werden kann. Die Empfangseinrichtung 75 kann mit ihrer optischen Achse 76 senkrecht zur äußeren Radstirnfläche 67 oder unter irgendeinem anderen bekannten Winkel zur Radstirnfläche 67 angeordnet sein. Wichtig ist nur, daß die Kante 70 erfaßt wird. Durch die Wahl der Kante 70 als Referenzlinie ist auf einfache Weise sichergestellt, daß die Referenzlinie in einer Querschnittsebene zur Radachse 9,9' liegt. Um den Durchmesser 85 der Kante 70 berechnen zu können, sind insgesamt drei Aufnahmen notwendig. In Figur 7 ist lediglich nur eine Aufnahme eines Lichtschnittes 74 der Kante 70 dargestellt. Zum Ermitteln weiterer Daten zur Berechnung von Durchmessern an der Radumfangsfläche in definierter Lage am Radkranz- bzw. Radreifenprofil 13 wird die innere Radstirnfläche 11 und eine Spurkranzkehle 65 mindestens bis zur Meßkreisebene 58 durch die Lichtschnitte 77, 78 beleuchtet, die von den Strahlenquellen 79, 80 erzeugt und von der Empfangseinrichtung 81 aufgenommen werden.
Da die relative Lage der Strahlenquellen 71, 79, 80 relativ zueinander und zu den Empfangseinrichtungen 75, 81 bekannt ist, sind radiale Abstände von der Kante 70 bis zu ausgewählten Punkten auf dem Radkranz- bzw. Radreifenprofil 13 berechenbar. Die Lage der Meßkreisebene 58 ist, ausgehend vom Lichtschnitt 77, auf der inneren Radstirnfläche 11 des Rades leicht definierbar.

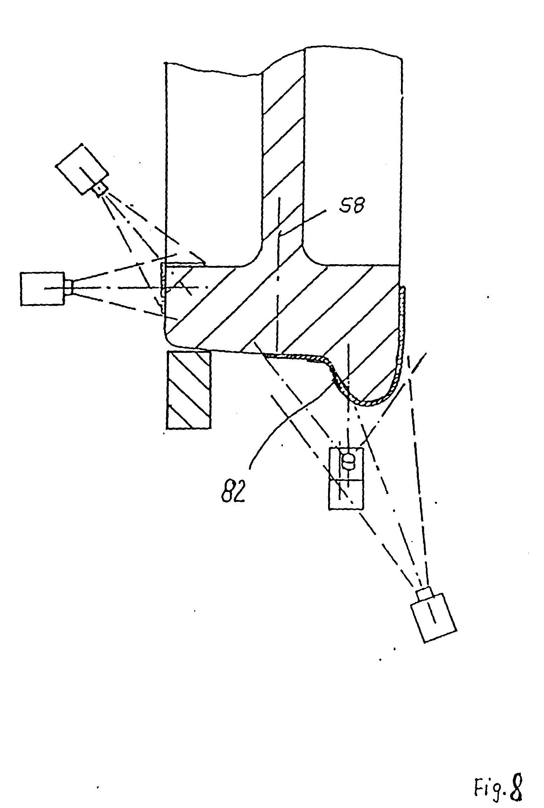

Figur 8 zeigt eine ähnliche Anordnung der Lichtschnitte wie Figur 7. Lediglich die Lichtschnitte 77 und 78 sind in Figur 8 zu einem Lichtschnitt 82 zusammengefaßt und ohne Unterbrechung bis zur Meßkreisebene 58 geführt.

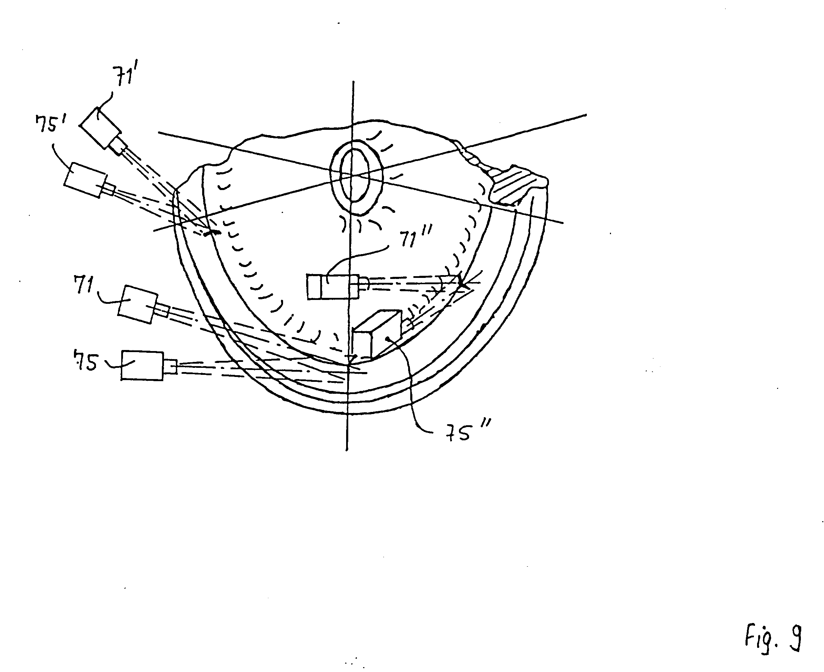

Figur 9 ist eine ergänzende Darstellung zu Figur 7. In Figur 7 ist lediglich eine Strahlenquelle 71 zur Erzeugung eines Lichtschnittes an der Kante 70 mit der dazugehörigen Empfangseinrichtung 75 dargestellt. Figur 9 zeigt auch die restlichen in Figur 7 nicht dargestellten Strahlenquellen 71', 71'' mit den ihnen zugeordneten Empfangseinrichtungen 75', 75".

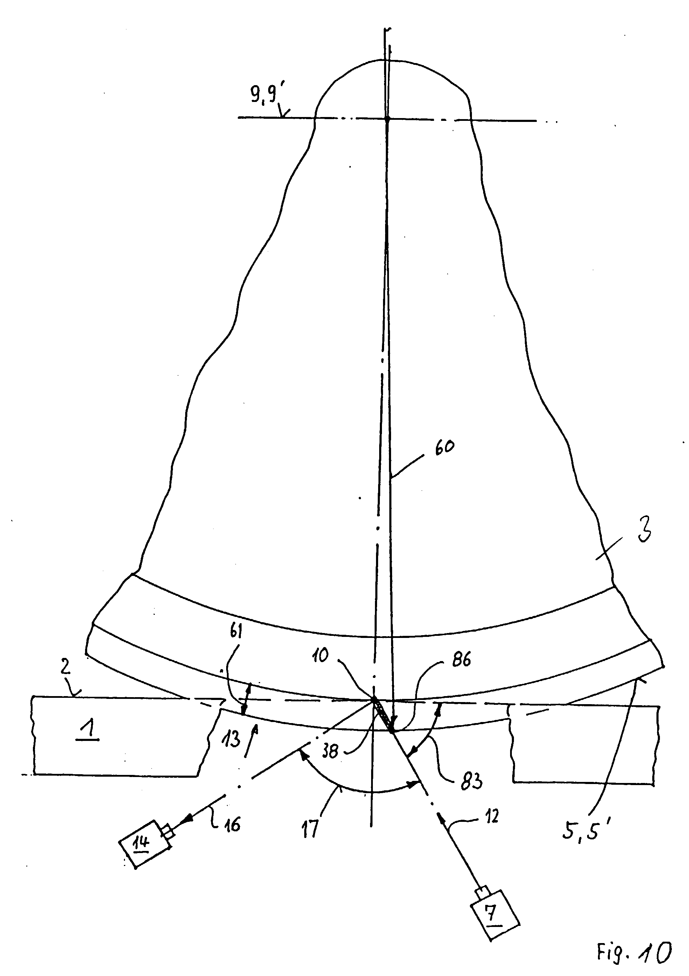

In Figur 10 wird eine Ausgestaltung der erfindungsgemäßen Einrichtung gezeigt, bei der die optische Achse 12 der Strahlenquelle 7, die auf dem Radkranz- bzw. auf dem Radreifenprofil 13 den Lichtschnitt 38 erzeugt, unter einem spitzen Winkel 83 zur Laufebene 2 und durch den Aufstandspunkt 10 verläuft. Die Empfangseinrichtung 14 ist so angeordnet, daß ihre optische Achse 16 auf die optische Achse 12 der Strahlenquelle 7 in einem möglichst großen, spitzen Winkel 17 trifft.
Das aufzunehmende Radkranz- bzw. Radreifenprofil 13 wird bei einer solchen Stellung der optischen Achse 12 der Strahlenquelle 7 nicht radial zur Radachse 9, 9' abgebildet. Eine Berechnung von Durchmessern am Umfang des Rades 3 bzw. des Spurkranzdurchmessers 60 ist aber trotzdem möglich. Auch ist es möglich die richtige Spurkranzhöhe 61 sowie das unverzerrte Profil zu errechnen, denn die Lage des Lichtschnittes 38 auf dem Radkranz- bzw. Radreifenprofil 13 ist bekannt und somit auch die Lage des aufgenommenen und abgebildeten Radkranz- bzw. Radreifenprofils 13, wodurch die Einordnung der Daten in ein Koordinatensystem möglich wird. Für den Punkt 86 auf der Spurkranzkuppe 5, 5' können Koordinaten x, y ermittel werden, womit die Lage dieses Punktes 86 in einem karthesischen Koordinatensystem definiert ist. Mit dem Punkt 86, unter Einbeziehung der anderen beiden Punkte 46, 47 (Fig. 3, Fig. 4) auf der Spurkranzkuppe 5,5', kann der Spurkranzdurchmesser 60 berechnet werden. Liegt der Spurkranzdurchmesser 60 vor, ist auch der Mittelpunkt bzw. die durch den Mittelpunkt gehende Mittellinie des Rades 3 definiert und die Koordinaten xm, ym (Figur 6) bekannt. Da auch für weitere Punkte des Lichtschnittes 38 auf dem Radkranz- bzw. Radreifenprofil 13 die Koordinaten bestimmbar sind, kann die Profillinie so nachgebildet werden, daß sie einem Lichtschnitt radial zur Radachse 9,9', wie in Figur 1 dargestellt, entspricht.
Die errechneten Durchmesser können von der Ausgabeeinheit ausgedruckt oder auf einem Bildschirm dargestellt werden.

## Patentansprüche

1. Verfahren zur Ermittlung eines Durchmessers einer durch mindestens einen Punkt einer Umfangsfläche an Rädern von Radsätzen mit einem Radkranz-bzw. Radreifenprofil verlaufenden Umfangslinie, bei dem
- am Rad (3,3') eine konzentrisch zu einer Radachse (9,9') verlaufende Referenzlinie bestimmt bzw. definiert wird,
- in Umfangsrichtung der Referenzlinie versetzt zum gleichen Zeitpunkt mindestens drei Lichtschnitte (37,37'38,40,40') die die Referenzlinie schneiden und damit je einen Schnittpunkt bilden, gelegt werden,
- jeder dieser Schnittpunkte von einer zugeordneten Kamera erfaßt wird,
- die relative Lage dieser Schnittpunkte der Lichtschnitte mit der Referenzlinie in einem definierten Bezugssystem aus den Aufnahmedaten von zugeordneten Empfangseinrichtungen (6,6',14) unter Berücksichtigung der Abbildungsgesetze ermittelt wird,
- relativ zu diesem Bezugssystem die Lage mindestens eines Punktes (46,47,48) auf der Umfangslinie (57) des zu ermittelnden Durchmessers ermittelt wird,
- aus der relativen Lage der Schnittpunkte der Lichtschnitte mit der Referenzlinie die Lage der Mittellinie (56) der Radachse (9,9') relativ zu diesem Bezugssystem und der relative Abstand des Bezugssystems zur gewünschten Umfangslinie (57) und hieraus der Durchmesser dieser Umfangslinie (57) ermittelt wird.

2. Einrichtung zur Durchführung des Verfahrens nach Anspruch 1, mit mindestens einer in einem Meßbereich angeordneten Laufebene (2), einer Einrichtung enthaltend mindestens eine Strahlenquelle (4, 4', 7; 93) mit Mitteln (90, 91, 92) zur Erzeugung von mindestens drei Strahlenbäumen (87, 88, 89) zur Erzeugung von drei Lichtschnitten (37, 37', 38, 40, 40') mittels elektromagnetischer Strahlenbündel an der Lauffläche eines Rades (3, 3'), Sensor- oder Empfangseinrichtungen (6, 6', 14) zur Erfassung der genannten Lichtschnitte (37, 37', 38, 40, 40') sowie einer Steuer- und Auswerteeinrichtung (30) verbunden mit einer Ausgabeeinheit (36), wobei die Steuer- und Auswerteeinrichtung (30) sowohl mit den Empfangseinrichtungen (6, 6',14) als auch mit der Einrichtung (4, 4',7; 90, 91, 92, 93) zur Erzeugung der Lichtschnitte (37, 37', 38, 40, 40') verbunden ist und wobei diese Einrichtung (4, 4',7; 90, 91, 92, 93) zur Erzeugung der Lichtschnitte (37, 37', 38, 40, 40') und die genannten Empfangseinrichtungen (6, 6', 14) derart relativ zueinander angeordnet sind, daß die Erzeugung der Lichtschnitte (37, 37', 38, 40, 40') und deren Erfassung innerhalb des Meßbereichs möglich ist,
dadurch gekennzeichnet,
daß ein mit der Steuer- und Auswertevorrichtung (30) verbundener Fühler (7, 14) vorgesehen ist, der ermittelt, wann das Rad (3, 3') eine Meßposition erreicht, und daß die Steuer- und Auswerteeinheit (30) so ausgelegt ist, daß sie beim Erreichen der Meßposition durch das Rad (3, 3') gleichzeitig die drei von den Empfangseinrichtungen (6, 6', 14) erfassten Lichtschnitte (37, 37', 38, 40, 40') an der Lauffläche des Rades (3, 3') speichert und daraus den Durchmesser des Rades ermittelt.

3. Einrichtung nach Anspruch 2, dadurch gekennzeichnet, daß zwei Empfangseinrichtungen (6,6') zu den ihnen zugeordneten Mitteln zur Erzeugung von Strahlenbäumen (87,88,89) so angeordnet sind, daß ihre optischen Achsen (18,18',19,19') sich etwa rechtwinklig schneiden.

4. Einrichtung nach Anspruch 2 und 3, dadurch gekennzeichnet, daß zwei Empfangseinrichtungen (6,6',) so angeordnet sind, daß sie je mit ihren optischen Achsen (18,18') einen Abstand (41,41') zwischen den Lichtschnitten (37,37',40,40') eines größten zu vermessenden Rades (3') und eines kleinsten zu vermessenden Rades (3) etwa mittig durchlaufen.

5. Einrichtung nach Anspruch 2 dadurch gekennzeichnet, daß zur Erzeugung der Strahlenbäume (86,87,88) je eine Strahlenquelle (4,4',7) vorgesehen ist.

6. Einrichtung nach Anspruch 2, dadurch gekennzeichnet, daß zur Erzeugung der Strahlenbäume (87,88,89) mindestens eine Strahlenquelle (93) mit mindestens zwei Strahlenteilern (91,92) und mindestens einem Umlenkspiegel (90) vorgesehen ist.

7. Einrichtung nach den Ansprüchen 2 bis 4, dadurch gekennzeichnet, daß eine Strahlenquelle (7) bzw. Strahlenbaum zur Erzeugung eines Lichtschnittes (38) so angeordnet ist, daß ihre optische Achse (12) etwa radial zur Radachse (9,9') und senkrecht zur Laufebene (2) verläuft und daß eine ihr zugeordnete Empfangseinrichtung (14) so angeordnet ist, daß ihre optische Achse (16) mit der optischen Achse (12) der Strahlenquelle (7) bzw. des Strahlenbaumes (87) einen spitzen Winkel (17) bildet.

## Claims

1. A method of determining a diameter of a circumferential line extending through at least one point of a circumferential area on wheels in wheelsets with a wheel-rim or wheel-tire profile, whereby
- a reference line extending concentric with a wheel axis (9,9') is determined on the wheel (3,3'),
- at least three light sections (37,37',38,40,40') which intersect the reference line and accordingly each form a point of intersection are laid out in the circumferential direction of the reference line displaced to the same point of time,
- each of these points of intersection is detected by an associated camera,
- the relative position of these points of intersection of the light section to the reference line is determined in a defined reference system from the pickup data by associated reception provisions (6,6',14) taking into account the imaging laws,
- the position of at least one point (46,47,48) on the diameter being determined is determined on the circumferential line (57) relative to this reference system,
- the position of the center line (56) of the wheel axis (9,9') and the relative distance of the reference system from the desired circumferential line (57), and accordingly the diameter of this circumferential line (57), are determined relative to this reference system from the relative position of the points of intersection of the light sections to the reference line.

2. A provision for carrying out the method according to Claim 1, with at least one running surface (2) positioned in a measurement area, a provision including at least one source (4,4',7;93) of radiation with means (90,91,92) of generating at least three beam trees (87,88,89) for the generation of three light sections (37,37',38,40,40') by means of electromagnetic beam bundles on the running surface or a wheel (3,3'), sensor or reception provisions (6,6',14) for detecting the said light sections (37,37',38,40,40'), as well as a control-and-evaluation provision (30) connected to an output unit (36), whereby the control-and-evaluation provision (30) is connected to both the sensor or reception provisions (6,6',14) and to the provision (4,4',7;90,91,92,93) for generating the light sections (37,37',38,40,40') and whereby this provision (4,4',7;90,91,92,93) for generating the light sections (37,37',38,40,40') and the said reception provisions (6,6',14) are so positioned relative to one another that the generation of the light sections (37,37',38,40,40') and their detection is possible inside the measurement area,
characterized in that
a probe connected to the control-and-evaluation provision (30) is provided which determines when the wheel (3,3') has arrived at a measurement position and in that the control-and-evaluation provision (30) is so designed that it, upon arrival at turement position by the wheel (3,3'), simultaneously stores the three light sections (37, 37',38,40,40') detected by the reception provisions (6,6',14) on the running surface of the wheel (3,3') and determines therefrom the diameter of the wheel.

3. A provision according to Claim 2, characterized in that two reception provisions (6,6') are so positioned to the means, associated with them, of generating beam trees (87,88,89) that their optical axes (18,18',19,19') intersect approximately rectangularly.

4. A provision according to Claim 2 and 3, characterized in that two reception provisions (6,6') are so positioned that they, each, extend with their optical axes (18,18') a distance (41,41') approximately midway between the light sections (37,37',40,40') of a largest wheel (3') to be measured and of a smallest wheel (3) to be measured.

5. A provision according to Claim 2, characterized in that one beam source (4,4',7;) is provided to generate each beam tree (86,87,88).

6. A provision according to Claim 2, characterized in that, to generate the beam trees (87,88,89), at least one beam source (93) is provided with at least two beam splitters (91,92) and at least one deflecting mirror (90).

7. A provision according to Claims 2 to 4, characterized in that a beam source (7) or beam tree is so positioned to generate a light section (38) that its optical axis extends approximately radial to the wheel axis (9,9') and perpendicular to the running plane (2) and in that a reception provision (14) associated with it is so positioned that its optical axis (16) forms an acute angle (17) to the optical axis (12) of the beam source (7) or beam tree (87).

## Revendications

1. Procédé de calcul d'un diamètre d'une ligne circonférentielle passant par au moins un point d'une surface circonférentielle située sur des roues faisant partie d'essieux montés avec un profil de jante ou de bandage, selon lequel
- on détermine ou définit sur la roue (3,3') une ligne de réference concentrique à un essieu (9,9'),
- dans le sens circonférentiel de la ligne de référence et de façon décalée, on place simultanément au moins trois coupes optiques (37,37',38,40,40') formant chacune un point d'intersection en coupant la ligne de référence,
- chaque point d'intersection est enregistré par une caméra adjointe,
- la position relative de ces points d'intersection des coupes optiques avec la ligne de référence est calculée à partir des données d'enregistrement par des dispositifs de réception (6,6',14) adjoints, et ce dans un système de référence défini et en tenant compte des lois de projection,
- relativement à ce système de référence, on définit la position d'au moins un point (46,47,48) sur la ligne circonférentielle (57) du diamètre à calculer,
- sur la base de la position relative des points d'intersection des coupes optiques avec la ligne de référence, on détermine la position de la ligne médiane (56) de l'essieu (9,9') par rapport à ce système de référence ainsi que la distance relative entre ce système et la ligne circonférentielle (57) voulue afin de calculer le diamètre de cette ligne circonférentielle (57).

2. Dispositif d'application du procédé de la revendication 1 avec au moins un plan de roulement (2) disposé dans un champ de mesure, un dispositif comprenant au moins un source de rayonnements (4,4',7;93) avec des moyens (90,91,92) permettant de générer au moins trois arbres de rayonnement (87,88,89) pour produire au moyen de faisceaux de rayons trois coupes optiques (37,37',38,40,40') sur la bande de roulement d'une roue (3,3'), des dispositifs de détection et de réception (6,6',14) pour enregistrer les coupes optiques (37,37',38,40,40') indiquées ainsi qu'un dispositif de commande et d'analyse (30) relié à une unité de sortie (36), le dispositif de commande et d'analyse (30) étant relié aussi bien aux dispositifs de réception (6,6',14) qu'au dispositif (4,4',7;90,91,92,93) de génération des coupes optiques (37,37',38,40,40') et ce dernier étant disposé par rapport aux dispositifs de réception (6,6',14) mentionnés de manière à ce que la génération des coupes optiques (37,37',38,40,40') et leur analyse puisse se faire à l'intérieur du champ de mesure,
caractérisé en ce qu'on prévoit un palpeur (7,14), relié au dispositif de commande et d'analyse (30), qui détermine le moment où la roue (3,3') atteint une position de mesure et en ce que l'unité de commande et d'analyse (30) est étudiée pour mémoriser simultanément les trois coupes optiques (37,37',38,40,40') enregistrées par les dispositifs de réception (6,6',14) sur la bande de roulement de la roue (3,3') lorsque la roue (3,3') atteint la position de mesure, et ce de manière à déterminer le diamètre de la roue.

3. Dispositif selon la revendication 2 caractérisé en ce que deux dispositifs de réception (6,6') sont disposés par rapport aux moyens leur étant adjoints pour la génération d'arbres de rayonnement (87,88,89) de manière à ce que leurs axes optiques (18,18',19,19') se coupent à peu près à angle droit.

4. Dispositif selon les revendications 2 et 3 caractérisé en ce que deux dispositifs de réception (6,6') sont disposés de manière à ce que leurs axes optiques (18,18') passent à peu près au centre d'une distance (41,41') séparant les coupes optiques (37,37',40,40') d'une roue plus grande (3') à mesurer et celles d'une roue plus petite (3) evant également être mesurée.

5. Dispositif selon la revendication 2 caractérisé en ce qu'on prévoit une source de rayonnement (4,4',7) respective pour générer les arbres de rayonnement (86,87,88).

6. Dispositif selon la revendication 2 caractérisé en ce qu'on prévoit au moins une source de rayonnement (93) avec au moins deux lames séparatrices (91,92) et au moins un miroir de déviation (90) pour générer les arbres de rayonnement (87,88,89).

7. Dispositif selon les revendications 2 à 4 caractérisé en ce qu'une source de rayonnement (7) ou un arbre de rayonnement destiné à la génération d'une coupe optique (38) est disposé de manière à ce que son axe optique (12) s'étende à peu près radialement par rapport à l'essieu (9,9') et verticalement par rapport au plan de roulement (2) et en ce qu'un dispositif de réception (14) lui étant adjoint est placé de manière à ce que son axe optique (16) forme un angle aigu (17) avec l'axe optique (12) de la source de rayonnement (7) ou de l'arbre de rayonnement (87).
